# DEMANDE DE BREVET EUROPEEN

(11) **EP 1 689 181 A1**
(43) Date de publication de la demande: **09.08.2006**
(21) Numéro de dépôt: 06300100.2
(22) Date de dépôt: 02.02.2006
(51) Int. Cl.: H04N 7/14

(54) **Télephone comportant une caméra**

(30) Priorité: 04.02.2005 FR 0550343
(71) Demandeur: Sagem Communication, 75512 Paris Cedex 15 (FR)
(72) Inventeur: Sehier, Nicolas, 60700 Fleurines (FR); Tian, M. Yong, 77190 DAMMARIES-LES-LYS (FR)
(74) Mandataire: Camus, Olivier Jean-Claude

(57) **Abrégé**

L'invention concerne essentiellement un téléphone qui comporte une caméra (9) accrochée à un circuit (6) imprimé de ce téléphone. Ce téléphone comporte en outre un arbre (8) cylindrique creux qui se trouve à l'intérieur d'une molette (9) cylindrique creuse. La molette (9) est susceptible de tourner autour de l'arbre (8) qui est fixe par rapport au circuit (6) imprimé. La caméra (9) est accrochée ou emboîtée avec la molette (9). Et l'objectif de cette molette (7) débouche sur une périphérie extérieure de cette molette (7), vers une ouverture (10) de cette molette (7). La molette (7) est susceptible d'entrer en rotation, de manière à ce que l'objectif de la caméra (9) débouche sur une face avant ou arrière du téléphone.

## Description

La présente invention concerne un téléphone comportant une caméra. L'invention a notamment pour but de faciliter le déplacement en rotation de la caméra. L'invention a aussi pour but de protéger la caméra en cas de chute du téléphone et de préserver de l'usure des pièces de ce téléphone. L'invention trouve une application particulièrement avantageuse avec les téléphones de type DECT (Digital European Communication Telephone en anglais), mais elle pourrait aussi être mise en oeuvre avec des téléphones mobiles utilisés dans les réseaux GSM ou UMTS, voire des téléphones fixes classiques.

On connaît les téléphones de type DECT. Ce type de téléphone comporte généralement un combiné mobile qui échange des signaux électromagnétiques avec sa base. Un tel téléphone confère à un signal de son une bonne qualité d'écoute et permet de s'affranchir des contraintes des téléphones classiques liées à l'utilisation d'un fil qui relie la base et le combiné. En effet, en appelant à l'aide d'un téléphone de type DECT, un utilisateur n'est pas obligé de rester à une distance proche de la base reliée au réseau téléphonique, mais peut, au contraire, se déplacer à une distance éloignée de cette base.

Les téléphones de type DECT comportent souvent un combiné équipé d'une caméra. Cette caméra peut permettre de prendre des photos ou de réaliser des films à partir du combiné. Cette caméra peut aussi permettre de communiquer dans un mode de vidéoconférence avec des personnes, sous réserve que ces personnes utilisent elles aussi un téléphone muni d'une caméra. Dans un tel mode de fonctionnement, l'utilisateur peut dialoguer avec son interlocuteur tout en le voyant sur l'écran de son téléphone.

Ainsi, dans un exemple, lorsque la caméra se trouve du côté opposé d'un écran du combiné, un mode vidéo ou de prise de photographies peut être enclenché. L'utilisateur peut alors voir en temps réel une prise de vue qu'il est en train de réaliser. En revanche, lorsque la caméra se trouve du même côté que l'écran, le téléphone peut enclencher un mode de vidéoconférence. Le téléphone peut alors transmettre l'image de l'utilisateur, à distance, à son interlocuteur. Toutefois, la plupart des téléphones existants possède une caméra dont la rotation entraîne une inversion de l'image. Un traitement de l'image automatique ou commandé par un utilisateur est donc nécessaire pour que l'image apparaisse à l'endroit sur l'écran du téléphone.

On connaît aussi des téléphones de type DECT qui assurent des fonctions de vidéosurveillance avec commande à distance. Le document US0113861 décrit un téléphone dont le combiné est placé sur un support mobile. L'utilisateur peut ainsi visualiser l'image acquise par le combiné à l'aide de l'écran d'un deuxième téléphone, tel qu'un téléphone mobile, relié au même réseau que celui auquel est relié le combiné. Toutefois, un tel téléphone ne permet pas de fonctionner en mode de vidéoconférence. En effet, la caméra n'est pas à priori mobile par rapport au combiné lui-même.

Par ailleurs, dans les téléphones existants, des connexions reliant la caméra à un circuit électronique du téléphone sont libres et accessibles à l'intérieur du combiné. Ces connexions sont donc susceptibles de se plier lors des mouvements de la caméra, et peuvent être facilement endommagées lors d'un démontage du téléphone. Ces connexions peuvent donc rapidement être usées et altérées.

En outre, dans les téléphones existants, la caméra affleure avec la surface du combiné. L'utilisateur est donc susceptible de poser ses doigts sur la vitre de l'objectif lorsqu'il déplace manuellement la caméra. En conséquence, après de multiples utilisations, les traces laissées par les doigts de l'utilisateur peuvent altérer l'image acquise par la caméra. De surcroît, en cas de chute, la caméra est très exposée.

L'invention se propose notamment de résoudre ces problèmes de connexions pliées, et de protection de la caméra.

A cet effet, dans l'invention, la caméra est placée à l'intérieur d'une molette cylindrique qui tourne autour d'un arbre fixe. Un utilisateur a accès à cette molette par la face arrière ou avant du téléphone, par l'intermédiaire d'une fenêtre ménagée dans le téléphone. En l'actionnant, l'utilisateur peut faire tourner la caméra d'au moins 180 degrés autour de l'arbre.

Dans un exemple, l'arbre est orienté verticalement, c'est à dire qu'il passe par le milieu des deux extrémités les plus éloignées du téléphone. L'utilisateur peut donc prendre une photo de face ou par l'arrière sans avoir à tourner le combiné, et sans qu'un traitement réalisant une inversion d'image soit nécessaire. En outre, l'utilisateur peut très facilement passer d'un fonctionnement en mode photo à un fonctionnement en mode de vidéoconférence.

Une connexion flexible qui relie la caméra à une carte du téléphone se situe en partie à l'intérieur de la molette et est enroulée autour de l'arbre fixe. Ainsi, lors d'un déplacement de la caméra, la connexion flexible s'enroule ou se déroule autour de l'arbre, à l'intérieur de la molette. Ce mouvement d'enroulement autour de l'arbre évite à la connexion flexible de se plier lors d'un déplacement de la caméra.

En outre, la molette qui contient une partie de la connexion flexible est fermée. Cette connexion flexible est donc en partie isolée du reste des composants. On prévient ainsi les mouvements intempestifs de la connexion à l'endroit d'une connexion entre la connexion flexible et la caméra qui peuvent se produire lors des démontages du téléphone. Toute la partie de la connexion qui se situe à l'extérieur de la molette est immobile lors des rotations de la caméra. En effet, toute cette partie est liée à l'arbre qui est fixe.

Par ailleurs, dans l'invention, la caméra se situe en retrait par rapport à un boîtier du combiné. Ainsi, la caméra est mieux protégée par rapport à une caméra dont l'objectif affleure avec la surface du boîtier. Dans une réalisation particulière, la caméra se situe au milieu du téléphone. On expose ainsi encore moins la caméra lors d'une chute du téléphone. En effet, le téléphone a plutôt tendance à tomber sur ses coins.

Dans une première réalisation, on prévoit de déplacer manuellement la molette en rotation. Dans cette réalisation, c'est donc à l'utilisateur d'orienter l'objectif de la caméra dans la direction qu'il souhaite. Dans une deuxième réalisation, on prévoit de déplacer la molette à l'aide d'un moteur. Dans cette réalisation, le moteur entraîne en rotation une roue dentée reliée à la molette et assure ainsi le déplacement en rotation de la caméra.

L'invention concerne donc un téléphone mobile comportant une caméra accrochée à un circuit imprimé de ce téléphone,
caractérisé en ce qu'il comporte
- une molette annulaire cylindrique et un arbre cylindrique, fixe par rapport au circuit imprimé, un axe de la molette et un axe de l'arbre étant coaxiaux, l'arbre comportant un diamètre inférieur à celui de la molette et se trouvant à l'intérieur de la molette, la molette étant susceptible d'entrer en rotation autour de l'axe de l'arbre, la caméra étant maintenue par la molette, et un objectif de la caméra débouchant sur une périphérie extérieure de cette molette, dans une ouverture ménagée dans une face annulaire de la molette.

L'invention sera mieux comprise à la lecture de la description qui suit et à l'examen des figures qui l'accompagnent. Ces figures ne sont présentées qu'à titre indicatif et nullement limitatif de l'invention. Ces figures montrent :
Figures 1a-1b : des vues en trois dimensions d'un téléphone selon l'invention ;
Figure 1c : une représentation schématique en coupe d'une partie d'un téléphone selon l'invention ;
Figure 2a-2b : des vues en trois dimensions d'une molette utilisée dans un téléphone selon l'invention ;
Figure 3a-3c : des vues en trois dimensions d'une molette d'un téléphone selon l'invention entraînée en rotation par un moteur.

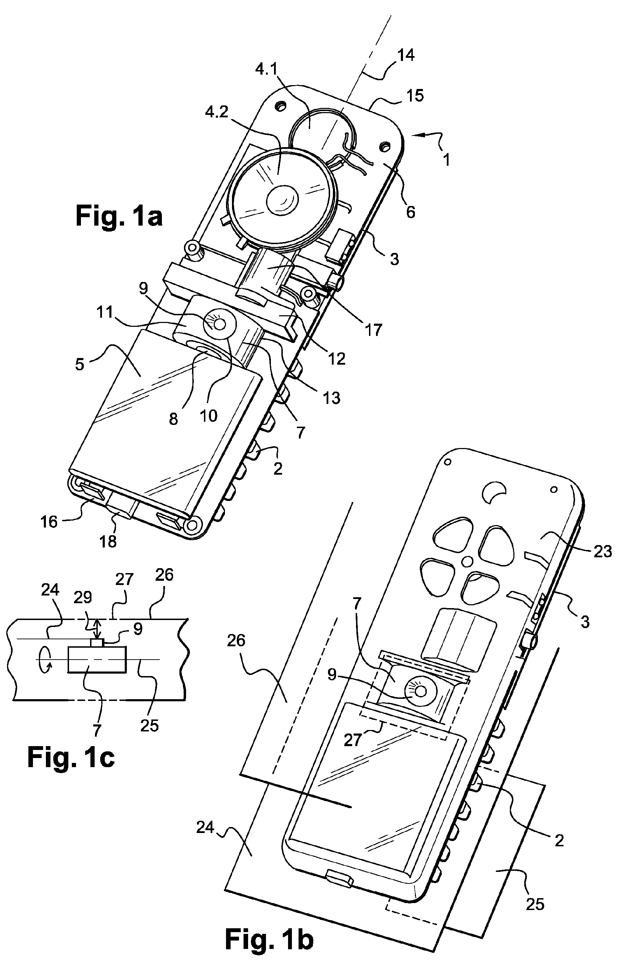

La figure 1a montre une vue en trois dimensions d'un combiné 1 d'un téléphone de type DECT selon l'invention. Un boîtier du combiné, qui englobe et protège les composants internes du combiné, n'est pas représenté afin de faire apparaître plus clairement les composants internes du combiné 1.

Le combiné 1 échange des signaux électromagnétiques avec un socle (non représenté) jouant un rôle de base téléphonique par des voies hertziennes. Ce socle est par exemple relié par ailleurs à un réseau téléphonique commuté par l'intermédiaire d'une ligne d'abonné, voire par l'intermédiaire d'un autocommutateur privé (non représenté).

Le combiné 1 comporte un clavier 2 et un écran 3 qui sont accrochés à une même face d'un circuit 6 imprimé. Ce combiné 1 comporte également deux haut-parleurs 4.1 et 4.2. Le haut-parleur 4.1 comporte une membrane orientée du côté de l'écran, et assure une amplification faible du son, lorsqu'un utilisateur a son oreille collée contre le téléphone. En comparaison, le haut-parleur 4.2 assure une amplification forte du son, de manière à ce qu'un utilisateur puisse entendre le son émis par le combiné 1, lorsque ce combiné 1 est éloigné de l'oreille de l'utilisateur. A cet effet, le haut-parleur 4.2 est plus puissant que le haut-parleur 4.1 et possède une membrane orientée du côté opposé de l'écran 3. Le combiné 1 comporte également un microphone 18, et une batterie 5 qui sont accrochées à une face du circuit 6 imprimé qui est opposée à la face qui porte l'écran 3.

En outre, conformément à l'invention, le combiné 1 comporte une molette 7 cylindrique creuse et un arbre 8 cylindre creux. Un axe de cette molette 7 et un axe de cet arbre 8 sont coaxiaux. L'arbre 8 comporte un diamètre inférieur à la molette 7 et se trouve à l'intérieur de cette molette 7. La molette 7 est susceptible d'entrer en rotation autour de l'axe de l'arbre 8 qui est fixe par rapport au circuit 6 imprimé, lui-même fixe par rapport au boîtier. Une caméra 9 est maintenue par la molette 7. Et un objectif de cette caméra 9 débouche sur une périphérie extérieure de cette molette 7, dans une ouverture (10) ménagée dans une face (11) annulaire de la molette (7).

Dans une réalisation particulière, la molette 7 se situe à l'intérieur d'une fenêtre 13 ménagée dans le circuit 6 imprimé. Cette fenêtre 13 est réalisée à l'endroit d'une extrémité de l'écran 3 qui débouche sur le clavier 2. Cette fenêtre 13 peut aussi être réalisée entre l'écran 3 et le clavier 2 du combiné 1, globalement au milieu de ce combiné 1. Ce positionnement de la molette 7 permet de protéger la caméra 9 en cas de chute du combiné 1. En effet, lors d'une chute, le combiné 1 n'a pas tendance à tomber sur sa partie milieu mais plutôt sur un de ses coins. Toutefois, en variante, la caméra 9 pourrait aussi se trouver à une extrémité du combiné 1, en raison d'une conformation particulière des composants du combiné 1 qui imposerait un tel positionnement de la caméra 9.

Le circuit 6 imprimé est globalement de forme rectangulaire. Ce circuit 6 imprimé comporte un support 12 de module de forme globalement parallélépipédique. Ce support 12 s'étend en saillie par rapport au circuit 6 et est parallèle aux cotés 15 et 16 les plus courts de ce circuit 6. L'arbre 8 est orienté perpendiculairement au support 12 et est accroché fixement à ce support 12. En variante, ce support 12 est parallèle aux côtés les plus longs du circuit 6 imprimé.

Dans une réalisation, la molette 7 est susceptible d'entrer en rotation autour d'un axe 14 qui passe globalement par le milieu des deux côtés 15 et 16 qui correspondent aux deux extrémités les plus éloignées du combiné 1. Autrement dit, un axe de la molette 7 est parallèle ou confondu avec cet axe 14. Cette rotation de la molette 7 autour de l'axe 14 évite à une unité de contrôle du téléphone de réaliser une inversion de l'image après une rotation de 180 degrés de la caméra 9. En effet, lors de la rotation de la caméra 9 autour de l'arbre 8, l'image issue de la caméra 9 n'est jamais inversée.

Comme on le verra aussi plus tard, un moteur 17 peut entraîner en rotation la molette 7.

La Figure 1b montre une vue en trois dimensions du combiné 1 sur lequel a été placé un boîtier 23 de protection.

Une périphérie de la molette 7 se trouve en retrait par rapport à une face du boîtier 23. En effet, lorsque la caméra 9 se trouve dans une position où elle débouche sur un des côtés du combiné 1, un plan 24 passant par l'objectif de cette caméra 9 est plus proche d'un plan 25 passant globalement par le milieu du combiné 1, que le plan 26 du boîtier qui lui est parallèle. Le plan 25 est parallèle à un plan formé par l'écran 3 et partage globalement le combiné 1 en deux parties égales. Dans une réalisation, il est possible de placer une vitre 27 de protection dans le prolongement du boîtier 23. Cette mise en retrait de la caméra 9 et l'ajout possible de la vitre 27 permettent de protéger la caméra 9 des chocs et des traces de doigts éventuels.

La figure 1 c qui montre une vue en coupe du combiné 1 met bien en évidence le retrait de la caméra 9 par rapport au boîtier 23. Ainsi, une distance 29 sépare le plan 26 passant par une face du boîtier 23 du plan 24 passant par l'objectif de la caméra 9. Cette distance 29 est en général de l'ordre du millimètre.

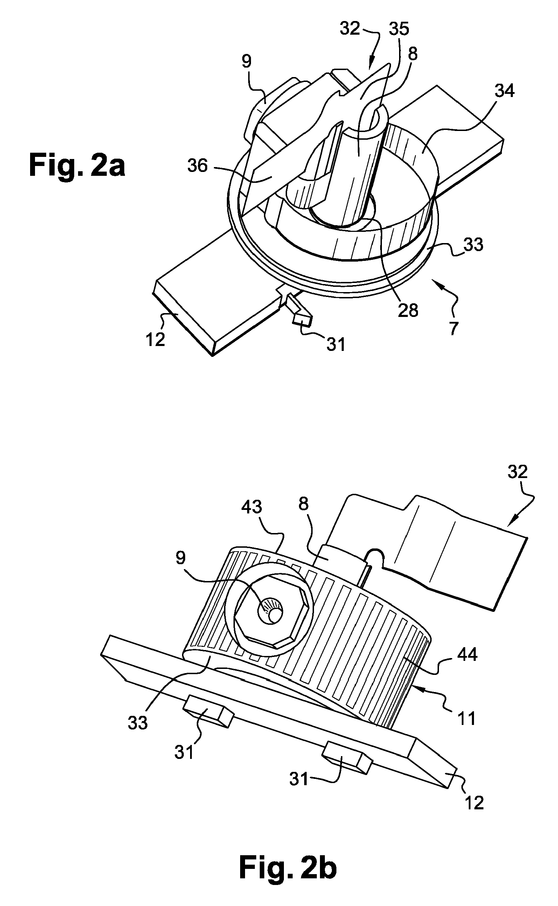

La figure 2a montre une vue en trois dimensions de l'intérieur de la molette 7. Une seule des faces circulaires de la molette 7 est représentée sur la figure. Cette face circulaire, référencée 33, comporte un trou 28 de forme circulaire qui autorise le passage de l'arbre 8.

Une connexion 32 relie la caméra 9 à un circuit électronique principal (non représenté) du combiné 1. Cette connexion 32 comporte une première partie 34 flexible qui se situe à l'intérieur de la molette 7 mais à l'extérieur de l'arbre 8. Cette connexion 32 comporte également une deuxième partie 35 qui se situe à l'intérieur de l'arbre 8, et une troisième partie 36 qui se trouve à l'extérieur de la molette 7. La première partie 34 flexible traverse l'arbre 8 de manière radiale et est enroulée autour de lui. Ainsi, la première partie 34 de la connexion 32 forme une spire qui est enroulée autour de l'arbre 8. Cette spire est de préférence réalisée de manière à occuper le moins d'espace possible à l'intérieur de la molette 7. La deuxième partie 35 traverse l'arbre 8 dans sa longueur et possède une largeur de préférence inférieure au diamètre de l'arbre 8. La troisième partie 36 s'étend globalement perpendiculairement à l'arbre 8, au-dessus de la molette 7. Cette troisième partie 36 est reliée au circuit électronique principal qui assure notamment une commande de la caméra 9. Cette liaison de la troisième partie 36 au circuit électronique principal peut être réalisée par l'intermédiaire d'un connecteur (non représenté).

L'arbre 8 comporte une encoche 37 réalisée dans toute son épaisseur et parallèlement à son axe. Cette encoche 37 assure le passage de la première partie 34 flexible vers la deuxième partie 35. L'arbre 8 est par ailleurs accroché au support 12 qui comporte une ou plusieurs languettes 31. Ces languettes 31 permettent au support 12 de se fixer au circuit 6 imprimé.

En variante, l'arbre 8 est plein et la deuxième partie 34 de la connexion 32 est plaquée ou collée contre cet arbre 8. Cette deuxième partie 34 suit l'arbre 8 sur toute sa longueur.

Dans la pratique, la connexion 32 utilisée est une connexion dite de type flex qui comporte des liaisons filaires protégées par une gaine isolante commune. Ces liaisons filaires sont positionnées les unes à côté des autres, dans un même plan. En général, la première, la deuxième et la troisième partie 34-36 forment une seule et même connexion flexible. Toutefois, ces trois parties 34-36 pourraient aussi être distinctes les unes des autres et être reliées par l'intermédiaire de connecteurs, ou soudées entre elles. En variante, la première partie 34 est flexible et les deux autres parties 35, 36 ne sont pas flexibles. En variante, la deuxième partie 35 est intégrée à l'arbre 8.

Dans une réalisation particulière, une extrémité de la première partie 34 est reliée à la caméra 9, de manière à ce que cette première partie 34 et la caméra 9 soient solidaires et forment une seule et même pièce. Cette première partie 34 peut être soudée par exemple à des connexions de la caméra 9. En variante, cette première partie 34 est reliée à la caméra 9 par l'intermédiaire d'un connecteur.

Dans un tel montage, lorsque la molette 7 entre en rotation autour de l'arbre 8, la première partie 34 de la connexion 32 s'enroule autour de l'arbre 8. Ainsi, la deuxième et la troisième partie 35, 36 de la connexion 32 qui se situent respectivement à l'intérieur de l'arbre 8 et à l'extérieur de la molette 7 ne bougent pas. Cette deuxième et troisième partie 35, 36 ne subissent donc pas de mouvements intempestifs lors des rotations de la caméra 9.

Dans une réalisation, l'arbre 8 comporte une butée et la molette 7 comporte deux protubérances qui s'étendent de manière radiale par rapport à l'arbre 8. Cette butée et ces protubérances sont positionnées de manière à limiter une rotation de la molette 7. Cette rotation peut par exemple être limitée à 180 degrés pour que l'objectif de la caméra 9 débouche soit sur une face avant, soit une la face arrière du boîtier 23 du téléphone. Dans un autre exemple, la rotation de la molette 7 est limitée à 90 degrés. Ainsi, dans une position ouverte, l'objectif de la caméra 9 débouche sur une des faces du boîtier 23. Et dans une position fermée qui correspond à une rotation de 90 degrés de la molette 7 par rapport à la position ouverte, l'objectif de la caméra 9 débouche vers l'intérieur du téléphone, de manière à ce que la caméra 9 soit protégée.

La figure 2b montre une vue en trois dimensions d'une molette 7 fermée. La molette 7 est ici destinée à être déplacée en rotation manuellement. Cette molette 7 comporte des cannelures 44 sur une partie de son contour cylindrique. En général, la molette 7 comporte des cannelures 44 sur un contour de sa face 11 annulaire, sauf à l'endroit de son ouverture. Ces cannelures 44 sont orientées généralement de manière axiale par rapport à l'arbre 8, et possèdent une forme de demi-cylindre. Ces cannelures 44 donnent une meilleure prise à l'utilisateur lorsqu'il fait tourner manuellement la molette 7.

La molette 7 est ici fermée par sa face 11 annulaire et sa deuxième face 43 circulaire. Cette deuxième face 43 circulaire qui est en forme de disque est identique à la première face 33 circulaire. Cette deuxième face 43 est en général solidaire de la face 11 annulaire.

Lors d'une étape d'assemblage particulière, on fixe d'abord l'arbre 8 au support 12. Ensuite, on place la première face 33 circulaire contre le support 12. Puis, on place la caméra 9 à la périphérie de la première face 33 et on positionne la connexion 32 en spirale à l'intérieur de la molette 7 de la manière précitée. Enfin, on ferme la molette 7 à l'aide de la deuxième face 43 circulaire et de la face 11 annulaire, de manière à ce que l'arbre 8 s'étende au-delà de la deuxième face 43 circulaire de la molette 7.

La molette 7 est montée sur le support 12. Ce support 12 comporte ici deux languettes 31 espacées entre elles d'une distance globalement égale à celle qui sépare chacune d'elle d'une extrémité du support 12. En variante, le support 12 comporte plus de deux languettes 31 qui sont espacées régulièrement entre elles. Ces languettes 31 entrent en coopération avec des réceptacles accrochés ou moulés avec le circuit 6 imprimé. En variante, le support 12 est collé sur le circuit 6 imprimé.

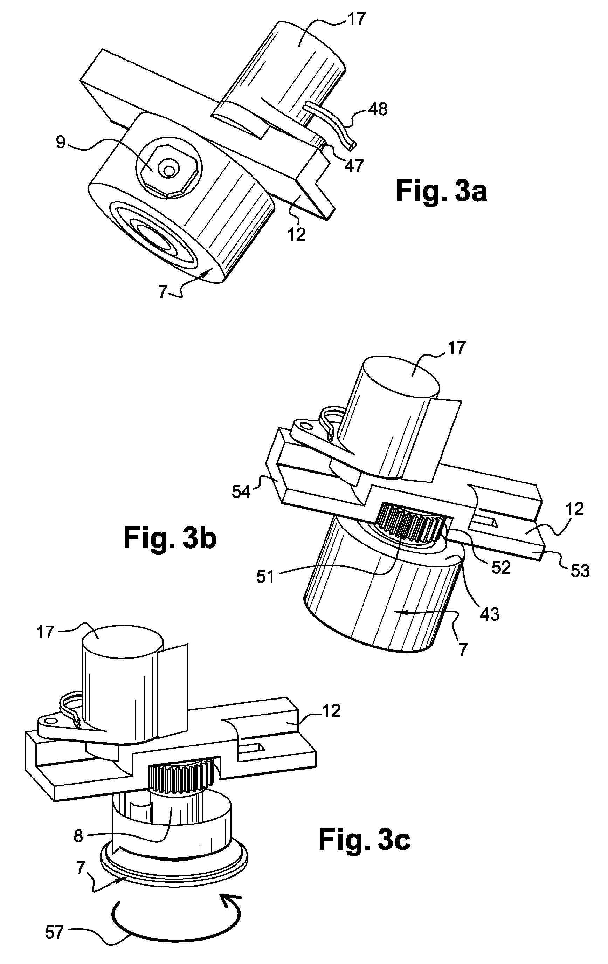

Les figures 3a-3c montrent des vues en trois dimensions sous différents angles de la molette 7 lorsqu'elle est entraînée par le moteur 17.

La figure 3a montre une vue selon un angle de 45 degrés de cet ensemble. Le moteur 17 est accroché au support 12 par l'intermédiaire d'un bras 47 qui s'étend parallèlement à une paroi du support 12. Un arbre du moteur 17 s'étend perpendiculairement à une paroi du support 12. Une extrémité de cet arbre est reliée à une première roue dentée (non visible) qui se situe dans une cavité, à l'intérieur du support 12. Comme on va le voir, cette première roue dentée engrène avec une deuxième roue dentée accrochée à la molette 7.

Le moteur 17 est alimenté par l'intermédiaire de fils 48 d'alimentation reliés à une source de tension. En général, le moteur 17 utilisé est un moteur à courant continu.

La figure 3b montre une vue en trois dimensions de la molette 7,et du moteur 17, selon un angle de 45 degrés opposé à celui de la figure 3.

Cette figure 3b fait apparaître que la deuxième roue, référencée ici 51, possède un axe parallèle à celui de la molette 7. Cette deuxième roue 51 dentée est accrochée à une des faces cylindriques de la molette 7. Dans cette réalisation, la molette 7 et la deuxième roue 51 sont globalement concentriques.

Le support 12 est conformé de manière à protéger les deux roues dentées. Le support 12 comporte une cavité 52 à l'intérieur de laquelle se situent la première et la deuxième roue dentée. Le support 12 comporte deux épaulements 53 et 54 sur lesquels la molette 7 prend appui.

Dans une variante, la molette 7 comporte des dents sur tout son contour extérieur et est entraînée par une roue dentée reliée à l'arbre du moteur 17.

La figure 3c montre une vue en trois dimensions de la molette 7, du support 12 et du moteur 17. Comme sur la figure 2a, la face 11 annulaire et une des faces circulaires de la molette 7 ne sont pas représentées de manière à faire apparaître les éléments intérieurs à cette molette 7.

La molette 7 est susceptible d'entrer en rotation autour de l'arbre 8 selon la flèche 57. Dans une réalisation, la molette 7 est autorisée à réaliser une rotation de 360 degrés selon le sens de la flèche 57. Dans une autre réalisation, la molette 7 est susceptible de réaliser une rotation de 180 degrés autour de l'arbre 8, dans deux sens de rotation différents.

La commande du moteur 17 peut être réalisée par deux touches du clavier 2 du combiné 1. Dans un exemple, en appuyant sur une touche, l'objectif de la caméra 9 se déplace en face avant du combiné 1, du même côté que l'écran 3 du combiné 1. Et en appuyant une autre touche, l'objectif de la caméra 9 se déplace en face arrière du combiné 1, du côté opposé à l'écran 3.

Comme précité, l'arbre 8 et la molette 7 peuvent respectivement comporter une butée et des protubérances afin de détecter ou de mettre en évidence des positions particulières de la caméra 9. En variante, à partir d'une initialisation du moteur 17, on associe, en exécutant un programme, la face avant du combiné 1 à une position angulaire particulière de l'arbre du moteur 17, et la face arrière du combiné 1 à une autre position angulaire particulière de l'arbre du moteur 17.

La molette 7 est ici réalisée pour un combiné 1 d'un téléphone de type DECT. Bien entendu, cette molette 7 pourrait aussi être réalisée pour tous les autres types de téléphone, tels que les téléphones mobiles ou les téléphones classiques. Cette molette 7 pourrait aussi être utilisée dans d'autres types d'appareils mettant en oeuvre des caméras mobiles, tels que des dispositifs de surveillance ou des vidéophones.

## Revendications

1. Téléphone mobile comportant une caméra (9) accrochée à un circuit (6) imprimé de ce téléphone,
**caractérisé en ce qu'**il comporte
- une molette (7) annulaire cylindrique et un arbre (8) cylindrique, orienté verticalement et fixe par rapport au circuit (6) imprimé, un axe de la molette (7) et un axe de l'arbre (8) étant coaxiaux, l'arbre (8) comportant un diamètre inférieur à celui de la molette (7) et se trouvant à l'intérieur de la molette (7), la molette (7) étant susceptible d'entrer en rotation autour de l'axe de l'arbre (8), la caméra (9) étant maintenue par la molette (7), et
- un objectif de la caméra (9) débouchant sur une périphérie extérieure de cette molette (7), dans une ouverture (10) ménagée dans une face (11) annulaire de la molette (7), ledit objectif étant apte à se déplacer d'une face du téléphone vers une autre face du téléphone de sorte que l'image issue de la caméra n'est pas inversée.

2. Téléphone selon la revendication 1 **caractérisé en ce qu'**il comporte
- une connexion (32) qui relie la caméra (9) à un circuit électronique principal du téléphone, cette connexion (32) comportant une première et une deuxième partie (34, 35), la première partie (34) flexible se trouvant à l'intérieur de la molette (7) mais à l'extérieur de l'arbre (8) et étant enroulée autour de l'arbre (8), la deuxième partie (35) suivant l'arbre (8) dans sa longueur.

3. Téléphone selon l'une des revendications 1 à 2 deux **caractérisé en ce que** l'arbre (8) est creux et **en ce que** la deuxième partie (35) passe dans ce creux.

4. Téléphone selon la revendication 3 **caractérisé en ce que**
- l'arbre (8) comporte une encoche (37) réalisée dans toute son épaisseur et parallèlement à son axe, cette encoche (37) assurant le passage de la première partie (34) flexible de la connexion (32) vers la deuxième partie (35).

5. Téléphone selon l'une des revendications 1 à 4 **caractérisé en ce que**
- la molette (7) se situe à l'intérieur d'une fenêtre (13) ménagée dans le circuit (6) imprimé, cette fenêtre (13) étant réalisée entre un clavier (2) et un écran (3) du téléphone, globalement au milieu de ce téléphone.

6. Téléphone selon l'une des revendications 1 à 5 **caractérisé en ce que**
- la périphérie de la molette (7) se trouve en retrait par rapport à une face d'un boîtier (23) de protection du téléphone.

7. Téléphone selon l'une des revendications 1 à 6 **caractérisé en ce que**
- l'arbre (8) et la molette (7) comportent respectivement une butée et des protubérances disposés de manière à ce que la molette (7) puisse effectuer une rotation limitée, par exemple de préférence de 180 degrés.

8. Téléphone selon l'une des revendications 1 à 7 **caractérisé en ce que**
- l'axe de rotation de la molette (7) est parallèle à un axe (14) passant par les milieux des deux extrémités (15, 16) les plus éloignées du circuit (6) imprimé.

9. Téléphone selon l'une des revendications 1 à 8 **caractérisé en ce qu'**il comporte un moteur (17), ce moteur (17) comportant un arbre dont une extrémité est reliée à une première roue dentée, cette première roue dentée entrant en coopération avec une deuxième roue (51) dentée, cette deuxième roue dentée entrainant la molette (7), la molette (7) étant concentrique avec celle-ci.

10. Téléphone selon l'une des revendications 1 à 9 **caractérisé en ce qu'**il comporte un support (12) de forme globalement parallélépipédique, ce support (12) s'étendant en saillie par rapport au circuit (6) imprimé et parallèlement à des côtés (15, 16) du circuit imprimé du téléphone, l'arbre (8) étant accroché à ce support (12).
